# EUROPEAN PATENT APPLICATION

(11) **EP 2 693 256 A1**
(43) Date of publication of application: **05.02.2014**
(21) Application number: 13174130.8
(22) Date of filing: 27.06.2013
(51) Int. Cl.: G02B 27/01, G03B 21/20, G02B 6/42

(54) **Windshield display with obstruction detection**

(30) Priority: 01.08.2012 US 201213563778
(71) Applicant: Delphi Technologies, Inc., Troy, MI 48007 (US)
(72) Inventor: Vincen, Mark R., Noblesville, IN 46060 (US); Kuhlman, Frederick F., Kokomo, IN 46902 (US)
(74) Representative: Robert, Vincent

(57) **Abstract**

A windshield display system (10) and method (400) of operating the same configured to detect an obstruction of light projected by the system (10). A light source (22) emits a light beam (24) that reflects off a scanning mirror (26) to direct the light beam (24) to a desired on a windshield (12). The system (10) includes a light detector (32) configured to detect emitted light (34) generated in response to the light beam (24) illuminating the desired location (28). The system (10) is arranged so the light beam (24) and the emitted light (34) that is detected travel essentially the same light path (30) between the scanning mirror (26) and the windshield (12). As such, an obstruction of the light path (30) is readily detected based only on the intensity of the emitted light (34) detected by the light detector (32).

## Description

### TECHNICAL FIELD OF INVENTION

This disclosure generally relates to windshield display system, and more particularly relates to a way to detect an obstruction of light projected by the system.

### BACKGROUND OF INVENTION

Display systems that display information on the windshield of a vehicle are known. Display systems that use a vectored ultraviolet (UV) laser to draw images on a fluorescent windshield have been proposed. However, direct exposure of human skin or the eye to the light from the laser is undesirable. Various systems have been proposed to detect when the laser light is obstructed or diverted. However, these systems rely on a camera situated remote from the laser to detect an obstruction based on when what appears on the windshield does not match what is expected to appear. Such systems undesirably rely on careful alignment of the camera and laser, and complicated image processing.

### SUMMARY OF THE INVENTION

In accordance with one embodiment, a windshield display system configured to detect an obstruction of light projected by the system is provided. The system includes a light source, a scanning mirror, a light detector, and a controller. The light source is operable to emit a light beam. The scanning mirror is operable to reflect the light beam from the light source toward a desired location on a windshield. The light beam defines a light path between the scanning mirror and the desired location. The light detector is configured to detect emitted light that is generated in response to the light beam illuminating the desired location. The emitted light is also reflected toward the light detector by the scanning mirror. The emitted light propagates from the desired location to the scanning mirror substantially via the light path. The controller is configured to determine when the light path is obstructed based on a detection signal from the light detector. The light source is a laser configured to emit ultraviolet light.

The system further comprises the windshield equipped with fluorescing material configured to generate emitted light when illuminated with UV light.

And also comprises a beam splitter interposed between the light source and the scanning mirror. The beam splitter is configured to direct emitted light from the scanning mirror toward the light detector. The system further comprises an optical bandpass filter configured to pass light having a bandpass wavelength corresponding to an emitted light wavelength of the emitted light, such that the optical bandpass filter is arranged to filter emitted light directed to the light detector. The controller is further configured to turn-off the light source when the light path is obstructed. The controller determines that the light path is obstructed if the detection signal indicates that an emitted light intensity of the emitted light is less than a minimum intensity threshold. The controller is further configured to turn-off the light source when the detection signal indicates that the desired location is being illuminated by excessive light from another source and determines that the desired location is being illuminated by excessive light from another source if the detection signal indicates that an emitted light intensity is greater than a maximum intensity threshold. The controller is further configured to turn-off the light source when the detection signal indicates that the light path is obstructed, or turn-off the light source when the detection signal indicates that the desired location is being illuminated by excessive light from another source.

In another embodiment, a method of operating a windshield display system is provided. The method includes the step of emitting a light beam toward a desired location on a windshield, thereby defining a light path to the desired location. The method also includes the step of detecting an emitted light propagating substantially in the light path. The emitted light is generated in response to the light beam illuminating the desired location. The method also includes the step of determining when the light path is obstructed based on an emitted light intensity of the emitted light propagating in the light path. The method includes turning-off the light beam when the light path is obstructed.

The step of determining when the light path is obstructed includes determining that the emitted light intensity of the emitted light is less than a minimum intensity threshold. The method includes determining when the desired location is being illuminated by excessive light from another source based on the emitted light intensity. The step of determining when the desired location is being illuminated by excessive light from another source includes determining that an emitted light intensity is greater than a maximum intensity threshold. The method includes turning-off the light beam when the desired location is being illuminated by excessive light from another source.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:

Fig. 1 is a cut-away side view of a vehicle equipped with a windshield display system in accordance with one embodiment;

Fig. 2 is another cut-away side view of a vehicle equipped with a windshield display system in accordance with one embodiment;

Fig. 3 is a diagram of the windshield display system of Fig. 1 and 2 in accordance with one embodiment; and

Fig. 4 is a flowchart of a method of operating the windshield display system of Fig. 1 and 2 in accordance with one embodiment.

### DETAILED DESCRIPTION

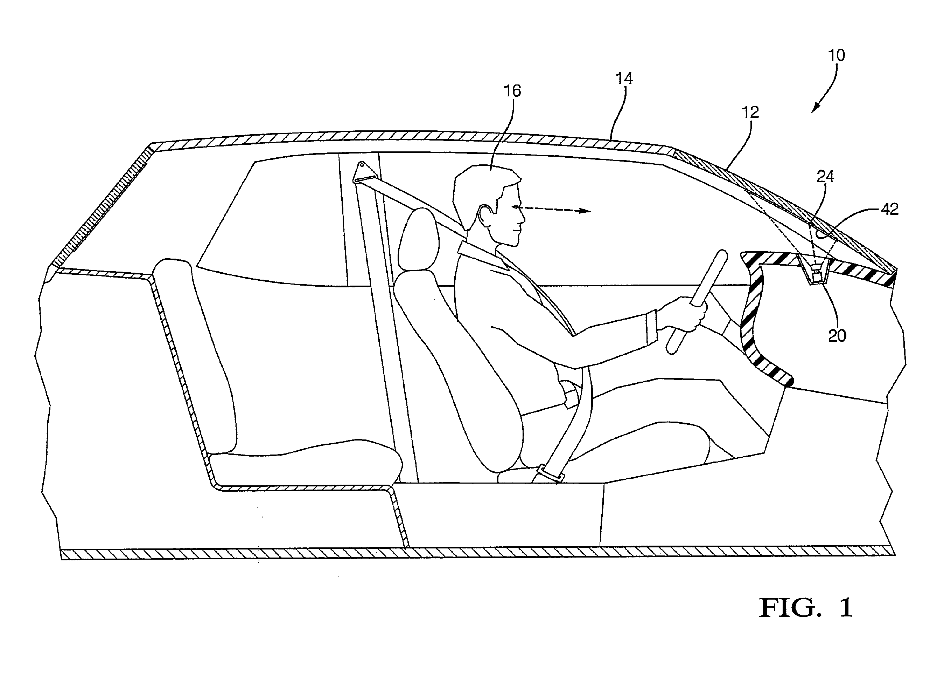

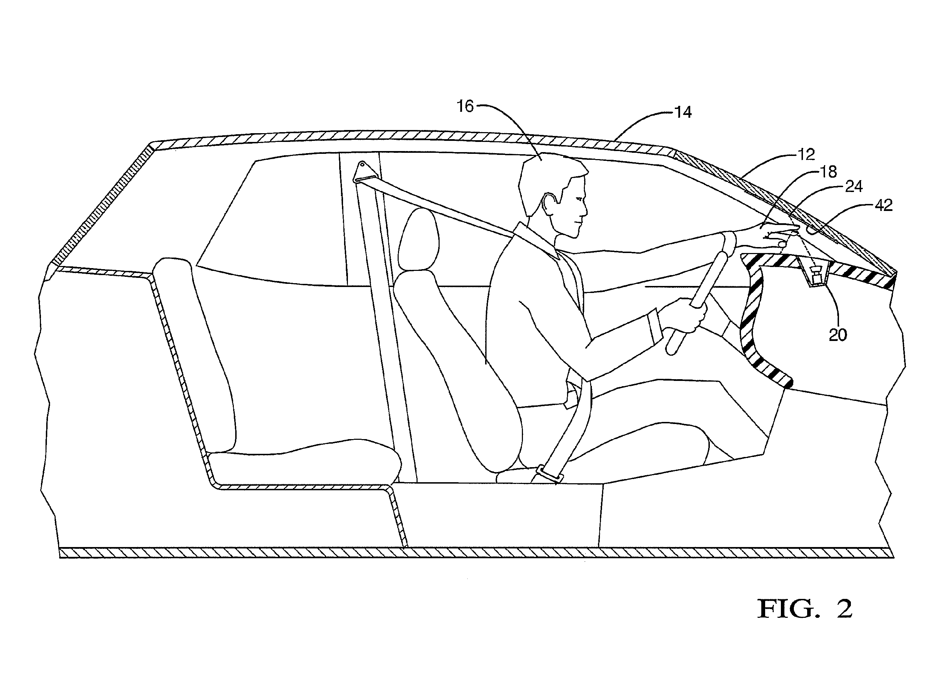

Fig. 1 illustrates a non-limiting example of a windshield display system, hereafter the system 10. In general, the system 10 is configured project an image onto a windshield 12 of a vehicle 14 so that the image projected can be observed by an operator 16 of the vehicle 14. As will be explained in more detail below, the system 10 is also configured to detect an obstruction of light projected by the system 10, for example obstruction by a hand 18 (Fig. 2) of the operator 16. Alternatively, some other object (not shown) may redirect or reflect an undesirable amount of the light projected by a projection device 20 directly toward the operator 16.

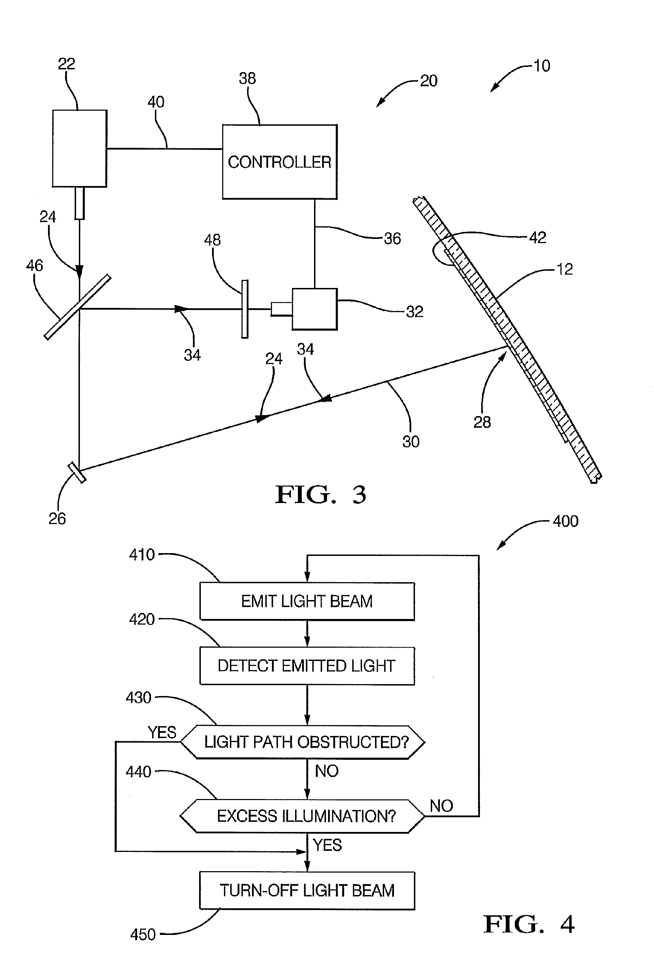

Fig. 3 illustrates a non-limiting example of the projection device 20. The projection device 20 may include a light source 22 operable to emit a light beam 24. The light source 22 preferably emits ultraviolet (UV) light, however it is recognized that a windshield display system could be devised that relies on a light source emitting light at wavelengths other than the UV band of wavelengths, infrared or visible wavelengths for example. By way of example and not limitation, the light source 22 may be a laser configured to emit ultraviolet (UV) light, for example a 405nm 250mW UV laser manufactured by Nichia Corporation located in Guangzhou,China , or a model RLTMDL-405-250-5 from Roither Laser Inc. located in Vienna, Austria.

The projection device 20 may also include a scanning mirror 26, also known as a galvanometer mirror or a micro-electro-mechanical system (MEMS) mirror. In general, the scanning mirror 26 is operable to reflect the light beam 24 from the light source 22 toward a desired location 28 on the windshield 12 and thereby define a light path 30 between the scanning mirror 26 and the desired location 28. As used herein, a scanning mirror is any device capable of varying the angle of the mirror relative to the light source 22 and the windshield 12 such that the light beam 24 scans the windshield in a manner effective to 'draw' an image with the light beam 24. In other words, the scanning mirror 26 is able to vary the desired location 28 on the windshield 12 such that a person viewing the windshield 12 may see an image, assuming that the windshield is configured to display an image when so illuminated. A suitable scanning mirror is a 4-Quadrant (bi-directional) actuator model no. 7MM available from Mirrorcle Technologies, Inc. located in Richmond, California.

The projection device 20 may also include a light detector 32 configured to detect the emitted light 34 that may be generated in response to the light beam 24 illuminating the desired location 28. In general, the emitted light 34 is reflected toward the light detector 32 by the scanning mirror 26, and so emitted light 34 propagates from the desired location 28 to the scanning mirror 26 via the light path 30. It should be appreciated that the light source 22 and the light detector 32 are arranged in relatively close proximity to each other as part of the projection device 20. In general, both the light beam 24 and the emitted light 34 are reflected off the scanning mirror 26 with the scanning mirror 26 at essentially the same position or orientation. Accordingly, the light beam and the emitted light 34 both travel the light path 30, i.e. the same path between the desired location 28 and the scanning mirror 26.

It should be appreciated that this arrangement is such that the light source 22 and the light detector 32 are readily aligned, and more reliably stay in alignment, especially when compared to windshield display systems that use a camera mounted at a location remote from the light source 22. Furthermore, a detection signal 36 does not need to include image information, as would a camera, but only needs to include an indication of the intensity of the emitted light 34. Alternatively, the detection signal 36 may advantageously include hue or saturation characteristics of the emitted light 34 so further analysis of the emitted light could be performed, other than image analysis. As used herein, an image is understood to include a plurality of pixels possibly having varying levels of hue, saturation, and intensity across the image. In contrast, the light detector 32 only needs to be able to detect a single pixel, or optically average the emitted light 34 emitted from the desired location 28. A suitable light detector is a Switchable Gain Photo Detector, part number PDA25K available from Thorlabs located in Newton, New Jersey.

The projection device 20 may also include a controller 38 configured to determine when the light path 30 is obstructed based on the detection signal 36 from the light detector 32. The controller 38 may include a processor such as a microprocessor or other control circuitry as should be evident to those in the art. The controller 38 may include memory, including non-volatile memory, such as electrically erasable programmable read-only memory (EEPROM) for storing one or more routines, thresholds and captured data. The one or more routines may be executed by the processor to perform steps for determining if signals received by the controller 38 for determining if the light path 30 is obstructed as described herein.

The controller 38 may be configured to output a light source signal 40 to the light source 22 that may be effective to turn-on or turn-off the light source 22, or vary the intensity of the light beam 24. Since the controller 38 effectively determines at least the intensity of the light beam 24, and optionally, for example, the color or colors of the light beam 24, the controller 38 can expect what the intensity or other characteristics of the emitted light should be indicated by the detection signal 36. As will be explained in more detail below, with the system 10 configured as described herein, determining obstruction may be as simple as determining if the intensity indicated by the detection signal 36 is greater than or less than some threshold determined based on the light source signal 40. As such, the system 10 provides a simple way to turn-off the light source 22 when the light path 30 is obstructed. It should be appreciated that the controller 38 does not need to be configured to perform image analysis as would be the case if the light detector was replace by a camera that observed an area of the windshield 12 substantially larger than the desired location 28.

If the light source 22 is configured to emit ultraviolet (UV) light, the system 10 may advantageously include the windshield 12 being equipped with fluorescing material configured to generate emitted light when illuminated with UV light, for example a fluorescing coating 42. A suitable fluorescing coating is available from SuperImaging Inc. located in Fremont, California.

The projection device 20 may also include a beam splitter 46 interposed between the light source 22 and the scanning mirror 26. The beam splitter 46 is oriented so that the emitted light 34 propagating along the light path 30 is directed into the light detector 32. As such, if any alignment of the projection device 20 is required when the projection device 20 is assembled, the adjustment can be by way of adjusting the orientation of the beam splitter 46. It should be recognized that this configuration generally allows for the projection device 20 to be installed in a variety of vehicle models having various orientations of windshields without further alignment of the system 10. This stands in marked contrast to systems that use cameras located remote from the light source 22 and so need to be calibrated for each different vehicle configuration (e.g. windshield angle) and camera location.

In this non-limiting example, the beam splitter 46 is generally configured to direct emitted light 34 emitted from the desired location 28, and reflected by the scanning mirror 26, toward the light detector 32. For this configuration, it may be preferable for the beam splitter 46 to be configured to be more transmissive of the wavelength of the light beam 24, and more reflective of the wavelength of the emitted light 34. However, if the beam splitter 46 is more transmissive of the wavelength of the emitted light 34, and more reflective of the wavelength of the light beam 24, then it may be preferable for the relative locations of the light source 22 and the light detector 32 shown in Fig. 3 to be exchanged. A suitable beam splitter is part number CMI-BS013 available from Thorlabs located in Newton, New Jersey.

An alternative configuration of the projection device 20 that does not include the beam splitter 46 is not shown, but is described as follows. The scanning mirror 26 is a split scanning mirror configured to have two sections of mirror fixedly coupled so that the sections move together, and the two sections are not parallel. Then the light source 22 is oriented to direct the light beam 24 to one section of the scanning mirror 26, and the light detector 32 is oriented so the emitted light 34 is reflected by the other section of the scanning mirror to the light detector 32. Since the two sections of the scanning mirror 26 move together, the relative orientations of the light source 22 and the light detector 32 can remain fixed even though the desired location 28 moves about to form an image on the windshield 12. It is recognized that the light beam 24 and the emitted light 34 will not travel precisely the same light path 30, but will travel substantially the same path and only be separated by the distance between the two sections of split mirror at the scanning mirror end to the light path, and converge at the desired location 28.

The projection device 20 may also include an optical bandpass filter 48 configured to generally pass light having a bandpass wavelength corresponding to an emitted light wavelength of the emitted light 34 (i.e. wavelength of the emitted light 34), and generally block light having a wavelength other than the bandpass wavelength. The optical bandpass filter 48 may be arranged to filter the emitted light 34 directed to or received by to the light detector 32. Including the optical bandpass filter 48 is advantageous because then the light detector 32 is less likely to include in the detection signal 36 contributions from light from other than that emitted by the fluorescing coating 42.

Continuing to refer to Fig. 3, the controller 38 may determine that the light path 30 is obstructed if the detection signal 36 indicates that an emitted light intensity of the emitted light 34 is less than a minimum intensity threshold. It should be appreciated that the minimum intensity threshold would likely be determined empirically, and could vary from vehicle model to vehicle model. It should also be appreciated that the minimum intensity threshold would vary if changes to the optical characteristics of the beam splitter 46 and/or the optical bandpass filter 48 were made. The controller 38 could also be configured to turn-off the light source 22 when the detection signal 36 indicates that the desired location 28 is being illuminated by excessive light from another source, for example the sun or headlights from an oncoming vehicle. In particular, the controller may determine that the desired location is being illuminated by excessive light from another source if the detection signal 36 indicates that an emitted light intensity is greater than a maximum intensity threshold. Again, the maximum intensity threshold would typically be determined empirically for various vehicle models and possibly based on legislated regulations for windshield displays. It follows then that the controller may be configured to turn-off the light source 22 when the detection signal 36 indicates that the light path 30 is obstructed, or turn-off the light source 22 when the detection signal 36 indicates that the desired location 28 is being illuminated by excessive light from another source.

Fig. 4 illustrates a non-limiting example of a method 400 of operating a windshield display system 10. In general, the method 400 seeks to determine if the light path 30 is obstructed by any object by determining if the emitted light 34 detected by the light detector 32 corresponds to what was expected.

Step 410, EMIT LIGHT BEAM, may include emitting a light beam 24 toward a desired location 28 on a windshield 12. Step 410 may also include operating the scanning mirror 26 to reflect the light beam 24 from the light source 22 to the desired location 28. For the projection device 20 illustrated in Fig. 3, a line between the scanning mirror 26 and the desired location 28 generally defines the light path 30.

Step 420, DETECT EMITTED LIGHT, may include detecting an emitted light 34 propagating in the light path 30. It should be understood that the emitted light 34 is not the only light generated in response to the light beam 24 illuminating the desired location 28 as the system 10 must also generate light that the operator 16 can see. But the portion of the emitted light that travel the light path 30 is what is detected by the system 10 to determine if an obstruction exists.

Step 430, LIGHT PATH OBSTRUCTED?, may include determining when the light path 30 is obstructed based on an emitted light intensity of the emitted light 34 propagating in the light path 30 For example, step 430 may include determining that the emitted light intensity of the emitted light 34 is less than a minimum intensity threshold. As described above, the minimum intensity threshold is generally an empirically determined value and is expected to vary, for example, as ambient lighting conditions change, the angle of the windshield 12 changes, the fluorescing coating 42 changes due improvements in the materials forming the fluorescing coating 42, or as the fluorescing coating 42 ages. If the emitted light intensity of the emitted light 34 is less than a minimum intensity threshold, then the method 400 may determine that an obstruction is occurring and proceed to step 450. If the emitted light intensity of the emitted light 34 is greater than a minimum intensity threshold, then it may be that no obstruction is present, and so the method 400 proceeds to step 440.

Step 440, EXCESS ILLUMINATION?, may include determining when the desired location 28 is being illuminated by excessive light, possibly from another source or possibly because the light source 22 is emitting more light than expected, based on the emitted light intensity. For example, step 440 may include determining that an emitted light intensity is greater than a maximum intensity threshold. As described above, the maximum intensity threshold is generally an empirically determined value and is expected to vary, for example, as ambient lighting conditions change. If the emitted light intensity of the emitted light 34 is greater than a maximum intensity threshold, then the method 400 may determine that an excessive light is impinging on the windshield 12, and so proceed to step 450. If the emitted light intensity of the emitted light 34 is less than a maximum intensity threshold, then it may be that no obstruction is present, and so the method 400 proceeds to step 410, which may include stepping the scanning mirror to the next desired location or pixel so that an image can be formed on the windshield 12.

Step 450, TURN-OFF LIGHT BEAM, may include turning-off the light beam when the light path is obstructed, or turning-off the light beam when the desired location is being illuminated by excessive light from another source. The controller 38 may send a command to the light source 22 to emit no light, or if safety of an out of control light source is a concern, the controller 38 may be configured to interrupt electrical power to the light source by way of a means not illustrated, but known to those skilled in the art.

Accordingly, a windshield display system 10, a controller 38 for the windshield display system 10 and a method 400 of operating a windshield display system is provided. The system is advantageous over systems present in the prior art in that the system 10 only 'looks' at the desired location 28, (i.e. point, pixel, or limited area) where the system 10 is illuminating the windshield 12 with a light detector 32, and so the complicated image processing algorithms required for camera based systems are avoided. Furthermore, since the light source 22 and the light detector 32 are generally preassembled into the projection device 20 prior to installation into the vehicle 14, aligning the light source and light detector can be more easily performed in a stand-off type operation as opposed to having to align the system after it is installed into the vehicle 14.

While this invention has been described in terms of the preferred embodiments thereof, it is not intended to be so limited, but rather only to the extent set forth in the claims that follow.

## Claims

1. A windshield display system (10) configured to detect an obstruction of light projected by the system (10), said system (10) comprising:
a light source (22) operable to emit a light beam (24);
a scanning mirror (26) operable to reflect the light beam (24) from the light source (22) toward a desired location (28) on a windshield (12) and thereby define a light path (30) between the scanning mirror (26) and the desired location (28);
a light detector (32) configured to detect emitted light (34) that is generated in response to the light beam (24) illuminating the desired location (28) and reflected toward the light detector (32) by the scanning mirror (26), wherein said emitted light (34) propagates from the desired location (28) to the scanning mirror (26) substantially via the light path (30); and
a controller (38) configured to determine when the light path (30) is obstructed based on a detection signal (36) from the light detector (32).

2. A system (10) in accordance with claim 1, wherein said light source (22) is a laser configured to emit ultraviolet (UV) light.

3. A system (10) in accordance with any previous claims, wherein said system (10) further comprises the windshield (12) equipped with fluorescing material configured to generate emitted light (34) when illuminated with UV light.

4. A system (10) in accordance with any previous claims, wherein said system (10) further comprises a beam splitter (46) interposed between the light source (22) and the scanning mirror (26), said beam splitter (46) configured to direct emitted light (34) from the scanning mirror (26) toward the light detector (32).

5. A system (10) in accordance with any previous claims, wherein said system (10) further comprises an optical bandpass filter (48) configured to pass light having a bandpass wavelength corresponding to an emitted light (34) wavelength of the emitted light (34), said optical bandpass filter (48) arranged to filter emitted light (34) directed to the light detector (32).

6. A system (10) in accordance with any previous claims, wherein said controller (38) is further configured to turn-off the light source (22) when the light path (30) is obstructed.

7. A system (10) in accordance with any previous claims, wherein said controller (38) determines that the light path (30) is obstructed if the detection signal (36) indicates that an emitted light intensity of the emitted light (34) is less than a minimum intensity threshold.

8. A system (10) in accordance with any previous claims, wherein said controller (38) is further configured to turn-off the light source (22) when the detection signal (36) indicates that the desired location (28) is being illuminated by excessive light from another source and determines that the desired location (28) is being illuminated by excessive light from another source if the detection signal (36) indicates that an emitted light intensity is greater than a maximum intensity threshold..

9. A system (10) in accordance with any previous claims, wherein said controller (38) is further configured to turn-off the light source (22) when the detection signal (36) indicates that the light path (30) is obstructed, or turn-off the light source (22) when the detection signal (36) indicates that the desired location (28) is being illuminated by excessive light from another source.

10. A method (400) of operating a windshield display system (10) comprising:
emitting (410) a light beam (24) toward a desired location (28) on a windshield (12), thereby defining a light path (30) to the desired location (28);
detecting (420) an emitted light (34) propagating substantially in the light path (30), said emitted light (34) generated in response to the light beam (24) illuminating the desired location (28);
determining (430) when the light path (30) is obstructed based on an emitted light intensity of the emitted light (34) propagating in the light path (30).

11. A method (400) in accordance with claim 10, wherein said method (400) includes :
turning-off (450) the light beam (24) when the light path (30) is obstructed.

12. A method (400) in accordance with claim 10 or 11, wherein the step of determining (430) when the light path (30) is obstructed includes determining that the emitted light intensity of the emitted light (34) is less than a minimum intensity threshold.

13. A method (400) in accordance with any of the claims 10 to 12, wherein said method (400) includes :
determining (440) when the desired location (28) is being illuminated by excessive light from another source based on the emitted light intensity.

14. A method (400) in accordance with claim 13, wherein the step of determining (440) when the desired location (28) is being illuminated by excessive light from another source includes determining that an emitted light intensity is greater than a maximum intensity threshold.

15. A method (400) in accordance with claim 13 or 14, wherein said method (400) includes :
turning-off (450) the light beam (24) when the desired location (28) is being illuminated by excessive light from another source.
